# EUROPÄISCHE PATENTSCHRIFT

(11) **EP 3 234 415 B1**
(45) Veröffentlichungstag und Bekanntmachung des Hinweises auf die Patenterteilung: **22.05.2019**
(21) Anmeldenummer: 15788065.9
(22) Anmeldetag: 03.11.2015
(51) Int. Cl.: F16J 15/00, F01D 11/06, F04D 29/10, F04D 29/12, F16J 15/34

(54) **WELLENDICHTUNGSANORDNUNG EINER FLUIDMASCHINE SOWIE VERFAHREN ZUR ABDICHTUNG EINER WELLE EINER FLUIDMASCHINE**
SHAFT SEAL ARRANGEMENT FOR A FLUID MACHINE AND METHOD FOR SEALING A SHAFT OF A FLUID MACHINE
DISPOSITIF D'ÉTANCHÉITÉ D'ARBRE D'UNE MACHINE HYDRAULIQUE ET PROCÉDÉ D'ÉTANCHÉITÉ D'UN ARBRE D'UNE MACHINE HYDRAULIQUE

(30) Priorität: 18.12.2014 DE 102014226429
(43) Veröffentlichungstag der Anmeldung: 25.10.2017
(73) Patentinhaber: EagleBurgmann Germany GmbH & Co. KG, 82515 Wolfratshausen (DE)
(72) Erfinder: WERDECKER, Ferdinand, 82432 Walchensee (DE); MÜLLER, Michael, 83673 Bichl (DE)
(74) Vertreter: Hoefer & Partner Patentanwälte mbB
(86) Internationale Anmeldenummer: PCT/EP2015/075548
(87) Internationale Veröffentlichungsnummer: WO 2016/096231

(56) Entgegenhaltungen:
- CA-A1- 2 075 604
- DE-A1-102008 031 980
- US-A1- 2012 038 112
- US-A1- 2013 259 679
- US-A1- 2014 161 587

## Beschreibung

Die vorliegende Erfindung betrifft eine Wellendichtungsanordnung einer Fluidmaschine, wie z.B. einer Kraftwerksturbine oder eines Verdichters, eine Fluidmaschine mit einer derartigen Wellendichtungsanordnung sowie ein Verfahren zum Abdichten an einer Welle einer Fluidmaschine.

Zur Abdichtung von Fluidmaschinen, wie z.B. Kraftwerksturbinen oder Verdichtern, werden flüssigkeitsgeschmierte Gleitringdichtungen verwendet, welche mit einem Öl enthaltenden Sperrmedium abgedichtet sind. Weiterhin gibt es Anwendungsfälle von Entspannungsturbinen, welche z.B. Organic Rankine Cycle (ORC)-Verfahren oder Geothermieanwendungen verwendet werden. Hierbei sollen Medien aus Gesundheitsgründen und Umwelt- bzw. Sicherheitsgründen nicht als Leckage in die Umwelt geleitet werden. Die Verwendung der flüssigkeitsgeschmierten Öldichtungen macht jedoch aufwändige Leckagerückführsysteme notwendig. Ferner müssen Ölaufbereitungssysteme vorgesehen werden, da das als Sperrmedium verwendete Öl mit den gefährlichen Medien in Kontakt kommt. Hierdurch sind jedoch die Kosten derartiger Anlagen sehr hoch. Weiterhin weisen derartige Anwendungen hohe Rotationszahlen der Wellen im Bereich von 40 m/s bis 140 m/s, wobei Öldichtungen nur bis zu Drehzahlen von 80 m/s einsetzbar sind, auf. Die US 2012/0038112 A1 und die US 2014/0161587 A1 zeigen Wellendichtungsanordnungen mit wenigstens drei Dichtungen, bei denen eine gezielte Strömung von Fluid über eine mittlere Dichtung vorhanden ist.

Es ist daher Aufgabe der vorliegenden Erfindung, eine Wellendichtungsanordnung einer Fluidmaschine zur Abdichtung an einer Welle bereitzustellen, welche bei einfachem und kostengünstigem Aufbau und Verwendung einer gasgeschmierten Gleitringdichtung eine leckagefreie Abdichtung an der Welle ermöglicht. Ferner ist es Aufgabe der vorliegenden Erfindung, eine Fluidmaschine mit einer derartigen Wellendichtungsanordnung bereitzustellen sowie ein Verfahren zum Betreiben einer derartigen Wellendichtungsanordnung bereitzustellen.

Diese Aufgabe wird durch eine Wellendichtungsanordnung mit den Merkmalen des Anspruchs 1 bzw. eine Fluidmaschine mit den Merkmalen des Anspruchs 15 bzw. ein Verfahren mit den Merkmalen des Anspruchs 16 gelöst. Die Unteransprüche zeigen jeweils bevorzugte Weiterbildungen der Erfindung.

Die erfindungsgemäße Wellendichtungsanordnung mit den Merkmalen des Anspruchs 1 weist den Vorteil auf, dass im Betrieb eine Leckage des Produktmediums vollständig verhindert werden kann. Dabei weist die Wellendichtungsanordnung einen einfachen und kostengünstigen Aufbau auf. Dies wird erfindungsgemäß dadurch erreicht, dass eine erste, zweite und dritte Dichtung vorgesehen ist, welche in Reihe zwischen einer abzudichtenden Produktseite und einer Atmosphärenseite angeordnet sind. Zwischen der ersten und zweiten Dichtung ist ein erster Raum mit einem ersten Druck definiert und zwischen der zweiten und dritten Dichtung ist ein zweiter Raum mit einem zweiten Druck definiert. Hierbei ist der erste Druck gleich oder im Wesentlichen gleich wie der zweite Druck. Erfindungsgemäß wird hierbei unter "im Wesentlichen gleich" verstanden, dass ein Druckunterschied zwischen dem ersten und zweiten Raum gleich oder kleiner 1%, insbesondere gleich oder kleiner 0,5%, insbesondere gleich oder kleiner 0,2%, ist.

Mit anderen Worten, sollte der Druckunterschied zwischen dem ersten und zweiten Raum gegen Null gehen bzw. Null sein. Der erste Raum ist ferner mit der Produktseite verbunden, um Produktmedium mit einem vorbestimmten Druck in den ersten Raum zuzuführen. Der zweite Raum ist mit einer Druckzufuhrleitung verbunden, über welche Druckmedium (Sperrmedium) in den zweiten Raum zuführbar ist. Die Drücke im ersten und zweiten Raum sind dabei gleich oder im Wesentlichen gleich, so dass die mittlere Dichtung, d.h., die zweite Dichtung, mit einem Druckunterschied von Null betreibbar ist. Hierdurch kann eine Leckage des im ersten Raum vorhandenen Produktmediums in den zweiten Raum vermieden werden. Dadurch kann eine Null-Leckage im Betrieb realisiert werden. Leckage ist in geringen Mengen vom ersten Raum über die erste Dichtung zurück zur Produktseite möglich bzw. vom zweiten Raum, welcher mit dem umweltverträglichen Druckmedium (Sperrmedium) gefüllt ist, zur Atmosphärenseite möglich. Durch den Betrieb der mittleren Dichtung mit einem Druckunterschied von Null kann ferner auch eine Verunreinigung des Produktmediums im ersten Raum durch eine Leckage über die mittlere Dichtung vom zweiten Raum vermieden werden.

Vorzugsweise ist die zweite Dichtung eine gasgeschmierte Gleitringdichtung mit einem rotierenden Gleitring und einem stationären Gleitring. Die gasgeschmierte Gleitringdichtung ist somit zwischen dem ersten und zweiten Raum angeordnet, in welchem der gleiche Druck oder ein im Wesentlichen gleicher Druck herrscht. Hierdurch kann durch die Gleitringdichtung eine effektive Abdichtung zwischen dem ersten und zweiten Raum sichergestellt werden.

Gemäß einer bevorzugten alternativen Ausgestaltung der vorliegenden Erfindung ist die zweite Dichtung eine radiale Spaltdichtung, insbesondere eine Labyrinthdichtung oder eine Kohleringdichtung. Die Kohleringdichtung ist dabei aus einem kohlenstoffhaltigen Material hergestellt und weist bevorzugt an einer zum rotierenden Bauteil gerichteten Seite eine ringförmig umlaufende Ausnehmung auf. Die radiale Spaltdichtung dichtet dabei unmittelbar an einem rotierenden Bauteil, z.B. einer Welle oder dgl., ab. Die radiale Spaltdichtung hat insbesondere den Vorteil, dass diese in Axialrichtung sehr kleinbauend ist, so dass eine gesamte axiale Länge der Wellendichtungsanordnung sehr klein sein kann.

Weiter bevorzugt ist die erste Dichtung eine radiale Spaltdichtung, insbesondere eine Labyrinthdichtung oder eine Kohleringdichtung. Durch die Verwendung einer radialen Spaltdichtung als erste Dichtung kann eine axiale Baulänge der Wellendichtungsanordnung weiter reduziert werden.

Weiter bevorzugt umfasst die Wellendichtungsanordnung ferner eine Steuereinheit und eine in der Druckzufuhrleitung für das Druckmedium zum zweiten Raum angeordnete erste Drosseleinrichtung. Die erste Drosseleinrichtung ist mit der Steuereinheit verbunden, wobei die Steuereinheit eingerichtet ist, die erste Drosseleinrichtung in Abhängigkeit des Drucks im ersten Raum derart zu regeln, dass der Druck im zweiten Raum gleich oder im Wesentlichen gleich dem Druck im ersten Raum ist. Die Regelung erfolgt dabei durch Öffnen oder Schließen der ersten Drosseleinrichtung. Somit kann erfindungsgemäß schnell auf eventuell im Betrieb auftretende Druckänderungen im ersten Raum reagiert werden, um den Druck im zweiten Raum an den Druck im ersten Raum anzupassen.

Weiter bevorzugt weist die als gasgeschmierte Gleitringdichtung ausgebildete zweite Dichtung eine Diamantbeschichtung an wenigstens einem der Gleitringe, vorzugsweise an beiden Gleitringen, auf. Hierdurch kann eine besonders sichere Abdichtung der zweiten Dichtung erreicht werden. Auch kann dadurch eine hohe Lebensdauer der zweiten Dichtung erhalten werden.

Das Druckmedium, welches über die Druckzufuhrleitung in den zweiten Raum zugeführt wird, ist vorzugsweise Luft oder Stickstoff. Hierdurch bereitet eine Leckage über die atmosphärenseitige dritte Dichtung aus Umweltgesichtspunkten keine Probleme.

Weiter bevorzugt umfasst die Wellendichtungsanordnung ferner eine Druckabfuhrleitung, welche vom zweiten Raum abgeht. Hierdurch kann insbesondere eine Leckage über die dritte Dichtung zur Atmosphärenseite möglichst gering gehalten werden. Besonders bevorzugt ist in der Druckabfuhrleitung eine zweite Drosseleinrichtung angeordnet, welche mit der Steuereinheit verbunden ist. Die Steuereinheit ist dabei eingerichtet, die zweite Drosseleinrichtung in Abhängigkeit des Drucks im ersten Raum zu regeln, um den Druck im zweiten Raum an den Druck im ersten Raum anzupassen, so dass ein Druckunterschied zwischen beiden Räumen tendenziell gegen Null geht oder Null ist.

Gemäß einer besonders bevorzugten Ausgestaltung der Erfindung umfasst die Wellendichtungsanordnung ferner eine vierte Dichtung, welche zwischen der ersten und zweiten Dichtung angeordnet ist. Die vierte Dichtung unterteilt dabei den ersten Raum zwischen der ersten und zweiten Dichtung in einen ersten Unterraum zwischen der ersten und vierten Dichtung und einen zweiten Unterraum zwischen der vierten und zweiten Dichtung. Der erste Unterraum weist dabei eine Verbindung mit der Produktseite auf und der zweite Unterraum weist eine Produktrückleitung zur Produktseite auf, über welche Produktmedium vom zweiten Unterraum zurück zur Produktseite strömen kann. Im ersten Unterraum ist dabei ein Druck vorhanden, welcher größer ist als ein Druck im zweiten Unterraum. Erfindungsgemäß ist dabei der Druck im zweiten Unterraum gleich oder im Wesentlichen gleich wie der Druck im zweiten Raum zwischen der zweiten und dritten Dichtung, so dass die zweite Dichtung, welche zu beiden Seiten jeweils noch wenigstens von einer weiteren Dichtung abgedichtet ist, welche mit einem Druckunterschied von Null betreibbar ist.

Durch das Vorsehen von vier Dichtungen in Reihe kann eine zusätzliche Produktrückleitung für das Produktmedium zur Produktseite in die Wellendichtungsanordnung integriert werden. Zwischen den vier Dichtungen sind drei Räume, d.h., der erste Unterraum, der zweite Unterraum und der zweite Raum, definiert. In allen drei Räumen ist ein Druck größer Atmosphärendruck vorgesehen. Hierbei ist der Druck zwischen dem mittleren Raum und dem atmosphärenseitigen Raum (zweiten Raum) gleich bzw. im Wesentlichen gleich, so dass die zweite Dichtung ohne Druckunterschied betreibbar ist. Hierdurch wird eine Leckage von Produktmedium in den zweiten Raum erfolgreich verhindert.

Gemäß einer weiteren bevorzugten Ausgestaltung der vorliegenden Erfindung umfasst die Wellendichtungsanordnung ferner eine fünfte Dichtung. Die fünfte Dichtung ist zwischen der zweiten und dritten Dichtung angeordnet. Die fünfte Dichtung unterteilt dabei den zweiten Raum in einen dritten Unterraum zwischen der zweiten und fünften Dichtung und in einen vierten Unterraum zwischen der fünften und dritten Dichtung. Dabei ist der vierte Unterraum mit der Druckzufuhrleitung verbunden. Eine Druckabfuhrleitung geht dabei vom dritten Unterraum ab. Dadurch ist die zweite Dichtung, welche mit einem Druckunterschied von Null betrieben wird, zwischen dem zweiten Unterraum und dem dritten Unterraum angeordnet. Die Drücke im zweiten Unterraum und im dritten Unterraum sind dabei gleich oder im Wesentlichen gleich, so dass eine Leckage über die zweite Dichtung verhindert werden kann. Somit sind bei diesem Ausführungsbeispiel fünf Dichtungen in Reihe angeordnet, wodurch zwischen den fünf Dichtungen vier Räume (erster Unterraum, zweiter Unterraum, dritter Unterraum, vierter Unterraum) definiert sind. Erfindungsgemäß ist wiederum eine mittlere Dichtung, d.h., die zweite Dichtung, zwischen der Produktseite und der Atmosphärenseite mit einem Druckunterschied von Null betreibbar, wobei die beiden zur mittleren Dichtung benachbarten Räume auf einem gleichen bzw. im Wesentlichen gleichen Druckniveau gehalten sind, welches höher als Atmosphärendruck ist. Diese Maßnahme stellt sicher, dass keine Leckage eines Produktmediums zur Atmosphärenseite möglich ist. Dadurch können Abdichtungen von gefährlichen Produktmedien kostengünstig und sicher ermöglicht werden. Dabei ist ferner ein Druck im vierten Unterraum größer als ein Druck im dritten Unterraum. Dadurch wird eine gewisse Leckage vom vierten Unterraum in den dritten Unterraum möglich, wobei die Leckage dann über die vom dritten Unterraum abgehende Druckabfuhrleitung abgeführt werden kann.

Weiter bevorzugt ist in der Produktrückleitung eine Wellendichtungsanordnung mit einer dritten Drosseleinrichtung angeordnet, welche mit der Steuereinheit verbunden ist, wobei die Steuereinheit eingerichtet ist, mittels Öffnen und Schließen der dritten Drosseleinrichtung den ersten Druck zu regeln.

Um eine noch kompaktere Ausgestaltung bei Vorsehen von fünf Dichtungen zu ermöglichen, sind die dritte und fünfte Dichtung in einer gemeinsamen Gleitringdichtung integriert, wobei die Druckzufuhrleitung des Druckmediums von einer Rückseite des stationären gemeinsamen Gleitrings durch den stationären Gleitring zu den Gleitflächen geführt ist. Der vierte Unterraum zwischen der dritten und fünften Dichtung ist dabei am Dichtspalt der gemeinsamen Gleitringdichtung angeordnet. Ausgehend vom vierten Unterraum ist eine Leckage zur einen Seite zur Atmosphärenseite und zur anderen Seite zum dritten Unterraum möglich.

Eine besonders kompakte und insbesondere in Axialrichtung kleinbauende Anordnung ist möglich, wenn alle Dichtungen bevorzugt als gasgeschmierte Gleitringdichtungen ausgebildet sind. Alternativ kann die erste Dichtung, welche zur Produktseite abdichtet, auch eine Kohledichtung oder eine Labyrinthdichtung sein.

Die Erfindung betrifft ferner auch eine Fluidmaschine, umfassend eine erfindungsgemäße Wellendichtungsanordnung. Die Fluidmaschine ist besonders bevorzugt eine Turbine, insbesondere eine Kraftwerksturbine, oder ein Verdichter. Die Fluidmaschine weist weiter bevorzugt eine Welle auf, welche mit einer Rotationsgeschwindigkeit von 40 m/s bis 200 m/s, insbesondere 90 m/s bis 140 m/s, betreibbar ist.

Weiterhin betrifft die vorliegende Erfindung ein Verfahren zum Betreiben einer Wellendichtungsanordnung, welche eine erste, zweite und dritte Dichtung umfasst, die in Reihe an einer Welle angeordnet sind. Die zweite Dichtung ist hierbei als mittlere Dichtung zwischen der ersten und dritten Dichtung angeordnet. Die drei in Reihe angeordneten Dichtungen definieren dabei einen ersten und einen zweiten Raum, wobei dem ersten Raum ein abzudichtendes Produktmedium zugeführt wird. Der zweite Raum weist ein Druckmedium auf, welches unter Druck steht, wobei der Druck im ersten Raum gleich oder im Wesentlichen gleich dem Druck im zweiten Raum ist. Dadurch kann die zweite Dichtung (mittlere Dichtung) ohne oder nur mit einem minimalen Druckgefälle betrieben werden.

Besonders bevorzugt wird das Druckniveau des Druckmediums im zweiten Raum mittels einer Drosseleinrichtung in Abhängigkeit des Drucks im ersten Raum geregelt. Besonders bevorzugt wird dabei auch der Druck des Produktmediums, welches dem ersten Raum zugeführt wird, nach der Entnahme von der Produktseite mittels einer Drosseleinrichtung geregelt.

Nachfolgend werden bevorzugt Ausführungsbeispiele unter Bezugnahme auf die begleitende Zeichnung im Detail beschrieben. In der Zeichnung sind dabei jeweils gleiche bzw. funktional gleiche Teile mit den gleichen Bezugszeichen versehen. In der Zeichnung ist:
- Fig. 1: eine schematische Schnittansicht einer Wellendichtungsanordnung gemäß einem ersten Ausführungsbeispiel der Erfindung,
- Fig. 2: eine schematische Schnittansicht einer Wellendichtungsanordnung gemäß einem zweiten Ausführungsbeispiel der Erfindung,
- Fig. 3: eine schematische Schnittansicht einer Wellendichtungsanordnung gemäß einem dritten Ausführungsbeispiel der Erfindung,
- Fig. 4: eine schematische Schnittansicht einer Wellendichtungsanordnung gemäß einem vierten Ausführungsbeispiel der Erfindung,
- Fig. 5: eine schematische Schnittansicht einer Wellendichtungsanordnung gemäß einem fünften Ausführungsbeispiel der Erfindung,
- Fig. 6: eine schematische Schnittansicht einer alternativen radialen Spaltdichtung zur Verwendung in der erfindungsgemäßen Wellendichtungsanordnung,
- Fig. 7: eine schematische Schnittansicht einer Wellendichtungsanordnung gemäß einem sechsten Ausführungsbeispiel der Erfindung,
- Fig. 8: eine schematische Schnittansicht einer Wellendichtungsanordnung gemäß einem siebten Ausführungsbeispiel der Erfindung, und
- Fig. 9: eine schematische Schnittansicht einer Wellendichtungsanordnung gemäß einem achten Ausführungsbeispiel der Erfindung.

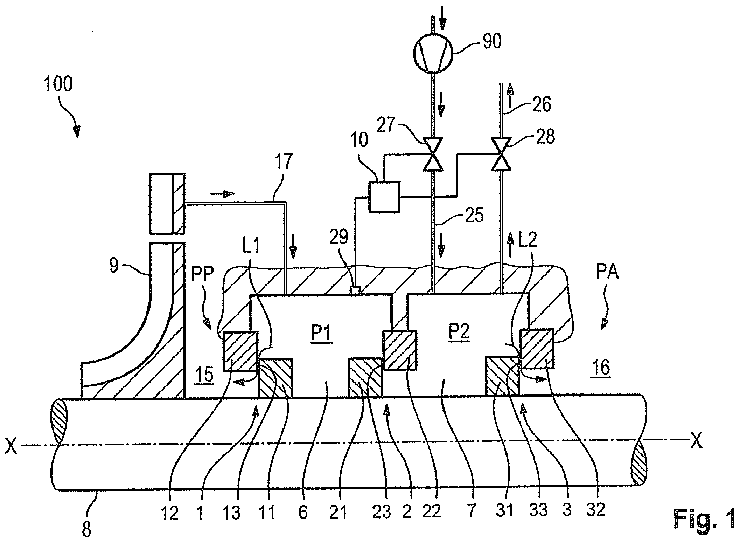

Nachfolgend wird unter Bezugnahme auf Fig. 1 eine Wellendichtungsanordnung 1 gemäß einem ersten Ausführungsbeispiel der Erfindung im Detail beschrieben.

Wie aus Fig. 1 ersichtlich ist, umfasst die Wellendichtungsanordnung 100 eine erste Dichtung 1, eine zweite Dichtung 2 und eine dritte Dichtung 3. Die drei Dichtungen sind dabei in Axialrichtung X-X in Reihe, ausgehend von einer Produktseite 15 zu einer Atmosphärenseite 16, an einer Welle 8 angeordnet. Die Wellendichtungsanordnung 100 dichtet somit die Produktseite 15 von der Atmosphärenseite 16 ab. Auf der Produktseite 15 ist eine Turbine 9 vorgesehen, welche ein Produktmedium, welches beispielsweise gefährlich für die Umwelt sein kann, fördert. An der Produktseite 15 herrscht dabei ein Produktdruck PP, wohingegen an der Atmosphärenseite 16 ein Atmosphärendruck PA herrscht.

Die erste, zweite und dritte Dichtung 1, 2, 3 sind alle als gasgeschmierte Gleitringdichtungen ausgebildet. Dabei umfasst die erste Dichtung 1 einen rotierenden Gleitring 11 und einen stationären Gleitring 12, welche zwischen sich einen Dichtspalt 13 definieren. Die zweite Dichtung 2 umfasst einen rotierenden Gleitring 21 und einen stationären Gleitring 22, welche zwischen sich einen Dichtspalt 23 definieren. Die dritte Dichtung 3 umfasst einen rotierenden Gleitring 31 und einen stationären Gleitring 32, welche zwischen sich einen Dichtspalt 33 definieren.

Bevorzugt weisen die beiden Gleitringe 21, 22 der zweiten Dichtung 2 eine Diamantbeschichtung auf.

Wie aus Fig. 1 ersichtlich ist, ist zwischen der ersten Dichtung 1 und der zweiten Dichtung 2 ein erster Raum 6 gebildet. Der erste Raum 6 weist einen ersten Druck P1 auf. Zwischen der zweiten Dichtung 2 und der dritten Dichtung 3 ist ein zweiter Raum 7 gebildet. Im zweiten Raum 7 herrscht ein zweiter Druck P2.

Der erste Raum 6 ist über eine Produktzufuhrleitung 17 mit der Produktseite 15 verbunden. Hierdurch kann Produktmedium von der Produktseite 15 in den ersten Raum 6 zugeführt werden. Entsprechend dem gewünschten Druckniveau im ersten Raum 6 wird das Produktmedium an der entsprechenden Stelle an der Produktseite 15 abgezogen.

Der zweite Raum 7 wird über eine Druckzufuhrleitung 25 mit einem Druckmedium versorgt. Das Druckmedium ist ebenso wie das Produktmedium gasförmig. Das Produktmedium wird mittels eines Verdichters 90 gefördert. In der Druckzufuhrleitung 25 ist eine erste Drosseleinrichtung 27 angeordnet.

Vom zweiten Raum 7 geht ferner eine Druckrückleitung 26 ab. In der Druckrückleitung 26 ist eine zweite Drosseleinrichtung 28 angeordnet.

Die Wellendichtungsanordnung 100 umfasst ferner eine Steuereinheit 10. Die Steuereinheit 10 ist dabei mit der ersten und zweiten Drosseleinrichtung 27, 28 verbunden. Ferner ist ein Sensor 29 zur Erfassung des ersten Drucks am ersten Raum 6 angeordnet. Der Sensor 29 übermittelt der Steuereinheit 10 das jeweilige Druckniveau im ersten Raum 6.

Die Steuereinheit 10 ist nun derart eingerichtet, dass durch Regelung der ersten und zweiten Drosseleinrichtung 27, 28 ein Druckniveau im zweiten Raum 7 derart geregelt wird, dass der erste Druck P1 im ersten Raum gleich dem ersten Druck P2 im zweiten Raum oder im Wesentlichen gleich ist. "Im Wesentlichen gleich" bedeutet erfindungsgemäß, dass ein Druckunterschied zwischen dem ersten Druck P1 und dem zweiten Druck P2 kleiner als 1%, insbesondere kleiner als 0,5%, ist. Hierdurch wird erreicht, dass die zweite Dichtung 2 druckausgeglichen betrieben werden kann. Mit anderen Worten kann die zweite Dichtung 2 mit einem Druckunterschied ΔP von Null betrieben werden. Hierdurch wird verhindert, dass das im ersten Raum 6 befindliche Produktmedium über die zweite Dichtung in den zweiten Raum 7 leckt. Erfindungsgemäß kann somit durch das Vorsehen von zwei Räumen, welche durch eine gasgeschmierte Gleitringdichtung (zweite Dichtung 2) voneinander getrennt sind, in welchem der gleiche Druck herrscht, eine Null-Leckage erreicht werden.

Wie in Fig. 1 angedeutet, ist vom ersten Raum 6 lediglich eine geringe erste Leckage L1 zur Produktseite 15 vorhanden. In ähnlicher Weise ist eine geringe zweite Leckage L2 vom zweiten Raum 7 zur Atmosphärenseite 16 vorhanden. Über die druckausgeglichene mittlere Dichtung (zweite Dichtung) ist keine Leckage vorhanden.

Es sei ferner angemerkt, dass es selbstverständlich auch möglich ist, dass die Steuereinheit 10 den Druck im zweiten Raum 7 lediglich durch Ansteuern einer der beiden Drosseleinrichtungen 27, 28 regelt. D.h., die Druckregelung im ersten Raum kann auch nur durch Regelung der ersten Drosseleinrichtung 27 oder nur durch Regelung der zweiten Drosseleinrichtung 28 erreicht werden. Bevorzugt werden allerdings beide Drosseleinrichtungen 27, 28 geregelt, da hierdurch ein schnellerer Regeleingriff ermöglicht wird, falls im ersten Raum 6 Druckschwankungen auftreten, welche im Betrieb der Turbine 9 auftreten können.

Somit wird erfindungsgemäß eine mittlere Dichtung der Vielzahl von Dichtungen mit einem Druckunterschied von Null betrieben. Dabei wird der Druck in den zur mittleren Dichtung benachbarten Räumen auf einem gleichen Niveau gehalten. Somit kann eine Leckage über die mittlere Dichtung sicher verhindert werden. Die beiden zur mittleren Dichtung benachbarten Räume sind durch wenigstens eine produktseitige Dichtung (erste Dichtung) und eine atmosphärenseitige Dichtung (dritte Dichtung) abgedichtet. Somit können beispielsweise bei der Anwendung in Kraftwerken die bisher verwendeten aufwändigen Öldichtungen mit komplizierten Leckagerückführsystemen und Trenneinrichtungen zum Trennen des Produktmediums von einem Sperrmedium, verzichtet werden. Erfindungsgemäß muss kein Leckagerückführsystem für das zur Abdichtung verwendete Produktmedium im ersten Raum 6 vorgesehen sein. Über die erste Dichtung 1 tritt zwar eine erste Leckage L1 auf, diese ist jedoch sehr gering, so dass der Betrieb der erfindungsgemäßen Wellendichtungsanordnung sehr wirtschaftlich ist. Auch aus dem zweiten Raum 7 ist nur eine sehr geringe zweite Leckage L2 vom zweiten Raum 7 zur Atmosphärenseite 16 vorhanden, so dass dies auch die hohe Wirtschaftlichkeit der Erfindung unterstützt.

Die erste Leckage L1 wird dabei zur Produktseite 15 in einen Bereich mit geringerem Druck zurückgeführt. Damit wird der Druckunterschied hier zwischen dem ersten Raum 6 und dem Druck an der Produktseite 15 nicht zu groß.

Ferner kann erfindungsgemäß durch die Verwendung der Wellendichtungsanordnung 100 auch eine Abdichtung bei hohen Drehzahlen der Turbine, insbesondere im Bereich von 40 m/s bis 140 m/s, ermöglicht werden, ohne dass hierbei Änderungen in der Auslegung der Wellendichtungsanordnung 100 notwendig sind. Öldichtungen können hierbei nur bis zu einer Drehzahl von ca. 80 m/s abdichten.

Um ganz sicher eine Leckage des Produktmediums über die zweite Dichtung 2 zu vermeiden, ist der erste Druck P1 geringfügig kleiner als der zweite Druck P2, beispielsweise im Rahmen eines Druckunterschieds von kleiner als 0,1%.

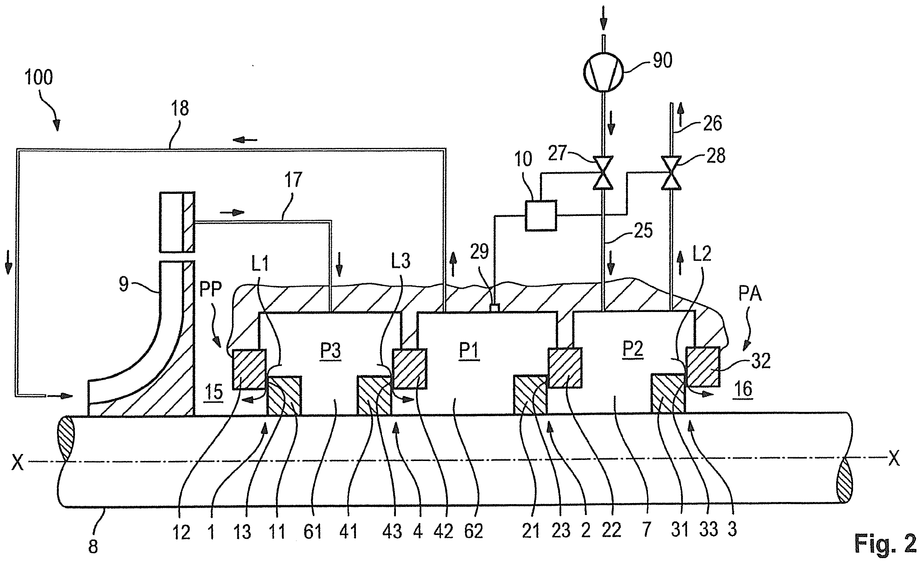

Fig. 2 zeigt eine Wellendichtungsanordnung 100 gemäß einem zweiten Ausführungsbeispiel der Erfindung.

Wie aus Fig. 2 ersichtlich ist, umfasst die Wellendichtungsanordnung 100 des zweiten Ausführungsbeispiels genau vier Dichtungen. Genauer, umfasst die Wellendichtungsanordnung eine erste Dichtung 1, eine zweite Dichtung 2, eine dritte Dichtung 3 und eine vierte Dichtung 4.

Die vierte Dichtung 4 ist zwischen der ersten Dichtung 1 und der zweiten Dichtung 2 angeordnet. Die vierte Dichtung 4 umfasst einen rotierenden Gleitring 41, einen stationären Gleitring 42 und einen zwischen den Gleitringen angeordneten Dichtspalt 43. Die vierte Dichtung 4 unterteilt den ersten Raum des ersten Ausführungsbeispiels in einen ersten Unterraum 61 und einen zweiten Unterraum 62. Somit umfasst die Wellendichtungsanordnung des zweiten Ausführungsbeispiels genau vier Dichtungen und genau drei Räume, welche zwischen den Dichtungen, die in Reihe an der Welle 8 angeordnet sind, vorgesehen sind.

Die Produktzufuhrleitung 17 führt dabei Produktmedium in den ersten Unterraum 61 zu. Vom zweiten Unterraum 62 geht eine Produktrückleitung 18 zurück zur Produktseite 15, bevorzugt zu einem Ort im Prozess mit niedrigem statischen Druck, welcher niedriger als der Druck P1 im Unterraum 62 ist. Ein dritter Druck P3 im ersten Unterraum 61 ist dabei etwas größer als der erste Druck P1 im zweiten Unterraum 62. Wie beim ersten Ausführungsbeispiel, ist der erste Druck P1 im zweiten Unterraum 62 gleich oder im Wesentlichen gleich zu dem Druck P2 im zweiten Raum 7. Der dritte Druck P3 im ersten Unterraum 61 ist auch etwas größer als der Produktdruck PP, so dass eine geringe erste Leckage L1 vom ersten Unterraum 61 zur Produktseite 15 erfolgt.

Wie im ersten Ausführungsbeispiel, ist ein Druckunterschied zwischen dem zweiten Unterraum 62, in welchem der erste Druck P1 herrscht, und dem zweiten Raum 7, in welchem der zweite Druck P2 herrscht, Null oder tendiert gegen Null. Dies wird mittels der ersten Steuereinheit 10 geregelt. Vom zweiten Unterraum 62 geht zusätzlich die Produktrückleitung 18 ab. Hierbei weist die Produktrückleitung 18 einen relativ kleinen Querschnitt auf. Dieser Querschnitt sowie die Länge der Produktrückleitung 18 bewirken eine Drosselung des zurückgeführten Mediums. Es sei angemerkt, dass es auch möglich ist, in die Produktrückleitung 18 eine zusätzliche regelbare Drosseleinrichtung einzubauen, wie in der Druckzuleitung 25 oder der Druckrückleitung 26. Wie aus Fig. 2 ersichtlich ist, ist weiterhin der Sensor 29 am zweiten Unterraum 62 angeordnet, um den ersten Druck P1 im zweiten Unterraum 62 zu erfassen.

Beim zweiten Ausführungsbeispiel sind alle vier Dichtungen als gasgeschmierte Gleitringdichtungen ausgebildet. Auch bei diesem Ausführungsbeispiel wird verhindert, dass Produktmedium unerwünscht in den zweiten Raum 7 und von dort in die Atmosphäre gelangen kann, indem die zweite Dichtung 2 über einen Druckunterschied ΔP von Null betreibbar ist und die Drücke P1, P2 im zweiten Unterraum 62 und im zweiten Raum 7 gleich sind bzw. eine Druckdifferenz zwischen diesen beiden Räumen gegen Null tendiert. Die Drücke P1 und P2 sind wiederum höher als der Atmosphärendruck PA. Eine dritte Leckage L3 vom ersten Unterraum 61 zum zweiten Unterraum 62 wird dabei dann über die Produktrückleitung 18 zurückgeführt.

Ansonsten entspricht dieses Ausführungsbeispiel dem ersten Ausführungsbeispiel, so dass auf die dort gegebene Beschreibung verwiesen werden kann.

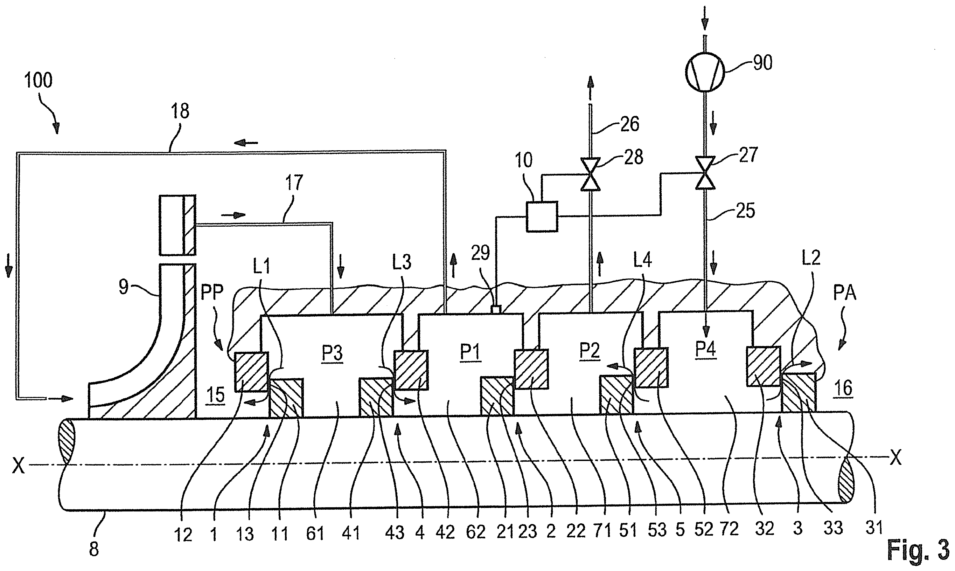

Fig. 3 zeigt eine Wellendichtungsanordnung 100 gemäß einem dritten Ausführungsbeispiel der Erfindung.

Wie aus Fig. 3 ersichtlich ist, umfasst die Wellendichtungsanordnung 100 des dritten Ausführungsbeispiels eine erste Dichtung 1, eine zweite Dichtung 2, eine dritte Dichtung 3, eine vierte Dichtung 4 und eine fünfte Dichtung 5. Die fünf Dichtungen sind wiederum in Reihe an der Welle 8 angeordnet.

Die fünfte Dichtung 5 ist zwischen der zweiten Dichtung 2 und der dritten Dichtung 3 angeordnet. Die fünfte Dichtung 5 unterteilt den zweiten Raum 7 in einen dritten Unterraum 71 und einen vierten Unterraum 72. Somit weist die Wellendichtungsanordnung 100 des dritten Ausführungsbeispiels insgesamt fünf Dichtungen und vier dazwischen angeordnete Räume auf. Ein vierter Druck P4 im vierten Unterraum 72 ist dabei größer als ein zweiter Druck P2 im dritten Unterraum 71. Dadurch ergibt sich eine kleine vierte Leckage L4 vom vierten Unterraum 72 zum dritten Unterraum 71 über die fünfte Dichtung 5.

Alle fünf Dichtungen sind in diesem Ausführungsbeispiel wiederum als gasgeschmierte Gleitringdichtungen ausgebildet. Die fünfte Dichtung 5 umfasst einen rotierenden Gleitring 51, einen stationären Gleitring 52 und einen zwischen dem rotierenden und stationären Gleitring angeordneten Dichtspalt 53.

Der zweite Druck P2 im dritten Unterraum 71 kann insbesondere durch Regelung der zweiten Drosseleinrichtung 28 in der Druckrückleitung 26 mittels der Steuereinheit 10 geregelt werden. Dabei ist ein Druckunterschied zwischen dem zweiten Unterraum 62 und dem dritten Unterraum 71 Null oder geht gegen Null, wie in den vorherigen Ausführungsbeispielen beschrieben. Somit ist die zweite Dichtung 2 wieder über einen Druckunterschied von Null betreibbar, so dass keine Leckage über die zweite Dichtung 2 vom zweiten Unterraum 62 zum dritten Unterraum 71 erfolgt.

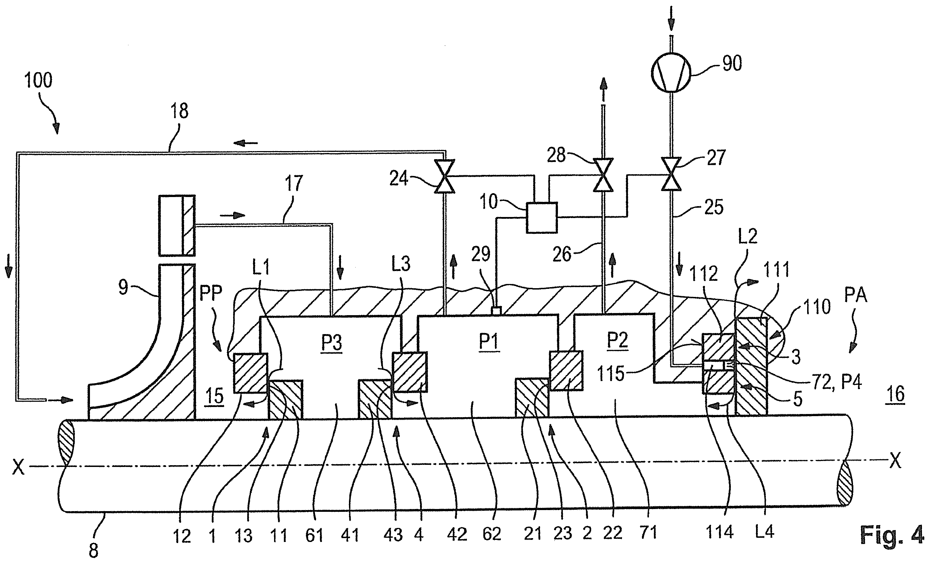

Fig. 4 zeigt eine Wellendichtungsanordnung 100 gemäß einem vierten Ausführungsbeispiel der Erfindung. Das vierte Ausführungsbeispiel entspricht dabei im Wesentlichen dem ersten Ausführungsbeispiel, wobei im Unterschied zum ersten Ausführungsbeispiel die fünfte Dichtung 5 und die dritte Dichtung 3 in einer gemeinsamen Dichtung 110 integriert sind.

Wie aus Fig. 4 ersichtlich ist, umfasst die gemeinsame Dichtung 110 einen gemeinsamen rotierenden Gleitring 111 und einen gemeinsamen stationären Gleitring 112. Im stationären Gleitring 112 ist eine Zuleitung 114 vorgesehen, welche von einer Rückseite 115 des stationären Gleitrings 112 zu den Gleitflächen der Gleitringe führt. Dabei ist der vierte Unterraum 72 im Bereich der Gleitflächen gebildet (vergleiche Fig. 4).

Das über die Zufuhrleitung 25 zugeführte Druckmedium wird durch die Zuleitung 114 im stationären Gleitring 112 zum vierten Unterraum 72 geleitet. Vom vierten Unterraum 72 erfolgt dann eine zweite Leckage L2 zur Atmosphärenseite 16 und eine vierte Leckage L4 in den dritten Unterraum 71.

Diese Anordnung weist die Besonderheit auf, dass eine kleinere axiale Baulänge möglich ist, da die dritte und fünfte Dichtung in eine gemeinsame Dichtung 110 integriert werden können. Ansonsten entspricht dieses Ausführungsbeispiel dem dritten Ausführungsbeispiel, so dass auf die dort gegebene Beschreibung verwiesen werden kann.

Wie weiter aus Fig. 4 ersichtlich ist, ist eine dritte Drosseleinrichtung 24 in der Produktrückleitung 18 vorgesehen, um ein Druckniveau im zweiten Unterraum 62 und damit auch im ersten Unterraum 61 zu regeln.

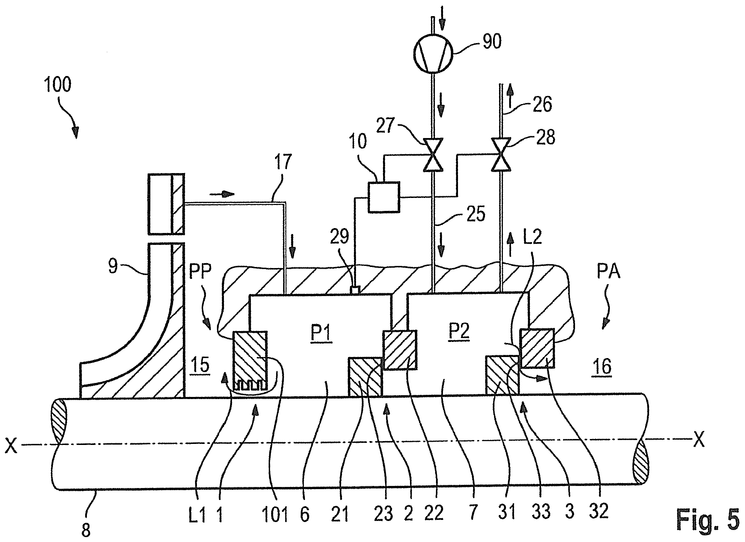

Fig. 5 zeigt eine Wellendichtungsanordnung 100 gemäß einem fünften Ausführungsbeispiel der Erfindung. Beim fünften Ausführungsbeispiel ist als erste Dichtung 1 statt einer Gleitringdichtung eine radiale Spaltdichtung 101 vorgesehen. Die radiale Spaltdichtung 101 ist eine Labyrinthdichtung mit einem zur Welle 8 zugewandten Labyrinth. Die über die Radialspaltdichtung 101 auftretende erste Leckage L1 wird wiederum zur Produktseite 15 in einen Bereich mit geringerem Druck zugeführt.

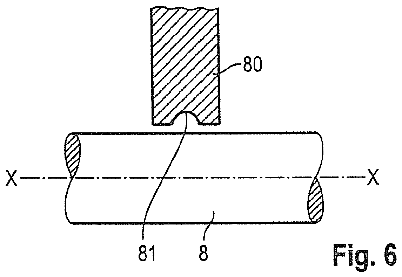

Statt der Labyrinthdichtung von Fig. 5 kann, wie in Fig. 6 gezeigt, auch alternativ eine Kohleringdichtung 80 mit einer umlaufenden Vertiefung 81 verwendet werden. Die Kohleringdichtung 80 ist ebenfalls eine radiale Spaltdichtung, wobei die Kohleringdichtung 80 besonders kostengünstig bereitstellbar ist. Wie aus Fig. 6 ersichtlich ist, ist die umlaufende Vertiefung gegen die Mantelfläche der Welle 8 gerichtet und bevorzugt mittig in der Kohleringdichtung 80 ausgebildet.

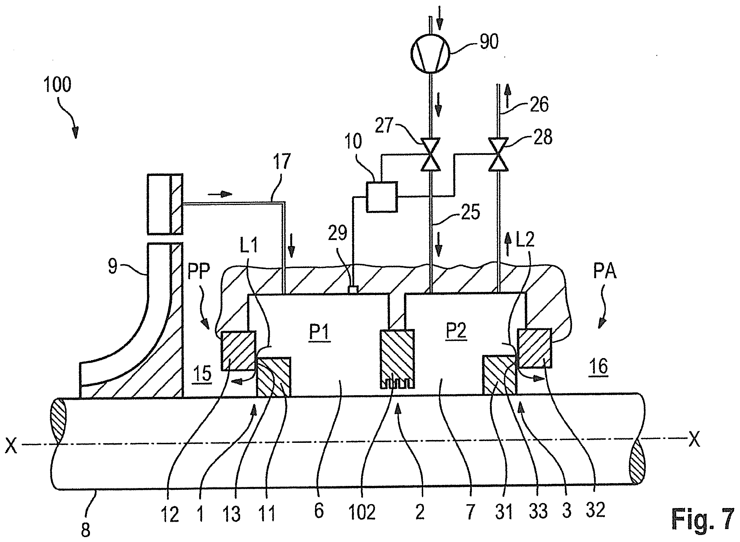

Fig. 7 zeigt eine Wellendichtungsanordnung 100 gemäß einem sechsten Ausführungsbeispiel der Erfindung. Beim sechsten Ausführungsbeispiel ist die zweite Dichtung 2 als radiale Spaltdichtung 102 ausgebildet. Da die beiden an die zweite Dichtung 2 angrenzenden Räume 6 und 7 auf einem gleichen Druckniveau gehalten werden, tritt keine Leckage über die zweite Dichtung 2 auf. Die radiale Spaltdichtung 102, welche bei der zweiten Dichtung 2 verwendet wird, ist ebenfalls als Labyrinthdichtung ausgebildet. Alternativ könnte auch die in Fig. 6 gezeigte Kohleringdichtung 80 verwendet werden.

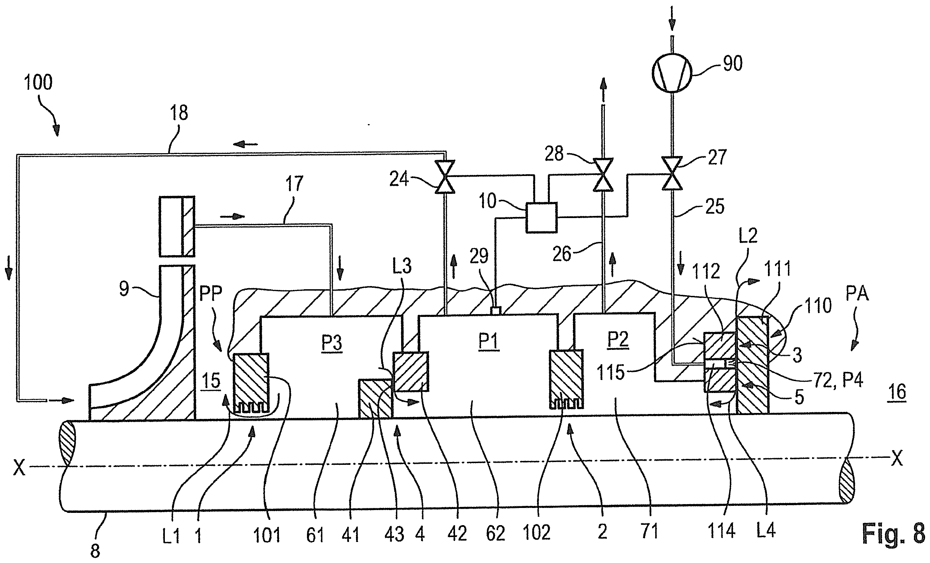

Fig. 8 zeigt eine Wellendichtungsanordnung 100 gemäß einem siebten Ausführungsbeispiel der Erfindung. Beim siebten Ausführungsbeispiel, welches im Wesentlichen dem in Fig. 4 gezeigten vierten Ausführungsbeispiel entspricht, sind die erste Dichtung 1 und die zweite Dichtung 2 durch radiale Spaltdichtungen 101 und 102 ersetzt. Im in Fig. 8 gezeigten siebten Ausführungsbeispiel sind dabei beide radialen Spaltdichtungen 101 und 102 als Labyrinthdichtungen vorgesehen. Alternativ könnten die beiden radialen Spaltdichtungen 101 und 102 auch als Kohleringdichtungen, wie in Fig. 6 gezeigt, ausgebildet sein.

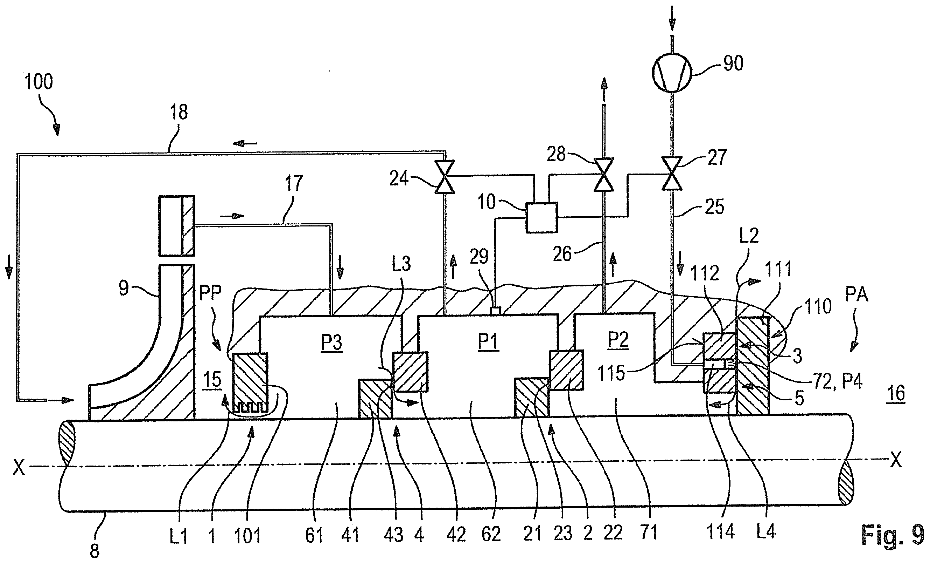

Fig. 9 zeigt eine Wellendichtungsanordnung 100 gemäß einem achten Ausführungsbeispiel der Erfindung. Das achte Ausführungsbeispiel entspricht im Wesentlichen dem in Fig. 8 gezeigten siebten Ausführungsbeispiel, wobei lediglich eine der Gleitringdichtungen durch eine radiale Spaltdichtung 101 ersetzt ist. Wie aus Fig. 9 ersichtlich ist, ist die erste Dichtung 1 als radiale Spaltdichtung 101 vorgesehen. Die radiale Spaltdichtung 101 dieses Ausführungsbeispiels ist wiederum als Labyrinthdichtung vorgesehen, wobei alternativ auch die in Fig. 6 gezeigte Kohleringdichtung verwendet werden kann.

Zu den in den Fig. 5 bis 9 beschriebenen Wellendichtungsanordnungen 100, welche jeweils mindestens eine radiale Spaltdichtung aufweisen, sei angemerkt, dass ein großer Vorteil der radialen Spaltdichtung ihre axial kürzere Bauweise im Vergleich mit einer Gleitringdichtung ist. Dadurch kann axialer Bauraum in Axialrichtung X-X der Welle 8 eingespart werden. Insbesondere bei Anwendungen im Großmaschinenbereich, wie z.B. Turbinen und Verdichtern in Kraftwerken und anderen großen Einrichtungen, sind die am Ende der Turbine bzw. des Verdichters vorhandenen axialen Bauräume sehr begrenzt. Dadurch bedingt die Verwendung wenigstens einer radialen Spaltdichtung einen großen Kostenvorteil. Ein weiterer Vorteil der radialen Spaltdichtungen im Vergleich mit Gleitringdichtungen liegt darin, dass diese einfach zu betreiben sind und eine hohe Robustheit aufweisen. Darüber hinaus sind die radialen Spaltdichtungen deutlich kostengünstiger als Gleitringdichtungen.

Zusammenfassend ist für alle Ausführungsbeispiele festzustellen, dass erfindungsgemäß auch ein Verfahren zum Betreiben der Wellendichtungsanordnung 100 bereitgestellt wird, bei dem eine zweite Dichtung 2, welche eine mittlere Dichtung zwischen einer produktseitigen Dichtung (Dichtung 1) und einer atmosphärenseitigen Dichtung (Dichtung 3) ist mit einem Druckgefälle von Null bzw. nahe Null betrieben wird. Die mittlere Dichtung ist dabei bevorzugt eine gasgeschmierte Gleitringdichtung, vorzugsweise mit Diamantbeschichtung oder alternativ eine radiale Spaltdichtung, wobei die beiden an die mittlere Dichtung angrenzenden Räume auf einem gleichen Druckniveau (erster Druck P1 und zweiter Druck P2) gehalten werden bzw. auf einem annähernd gleichen Druckniveau gehalten werden. Insbesondere wird mittels der Steuereinheit 10 immer sichergestellt, dass der zweite Druck P2 des Druckmediums minimal größer als der erste Druck P1 des Produktmediums ist, um eine Leckage des Produktmediums in das Druckmedium und somit ein Austreten des Produktmediums zu vermeiden.

Ein weiterer großer Vorteil der vorliegenden erfindungsgemäßen Wellendichtungsanordnung liegt darin, dass auf eine aufwendige und teure Verwendung eines Leckagerückführsystems verzichtet werden kann. Die Kosten können weiter reduziert werden, wenn die in den ersten bis vierten Ausführungsbeispielen verwendeten Gleitringdichtungen teilweise durch radiale Spaltdichtungen ersetzt werden können. Hierdurch kann der axiale Bauraum der Wellendichtungsanordnung signifikant reduziert werden und weitere hohe Kosteneinsparungen durch kürzere axiale Bauweise der Maschinen erreicht werden.

### Bezugszeichenliste

- 1: Erste Dichtung
- 2: Zweite Dichtung
- 3: Dritte Dichtung
- 4: Vierte Dichtung
- 5: Fünfte Dichtung
- 6: Erster Raum
- 7: Zweiter Raum
- 8: Welle
- 9: Turbine, Verdichter, Laufrad
- 10: Steuereinheit
- 11: Rotierender Gleitring
- 12: Stationärer Gleitring
- 13: Dichtspalt
- 15: Produktseite
- 16: Atmosphärenseite
- 17: Produktzufuhrleitung
- 18: Produktrückleitung
- 21: Rotierender Gleitring
- 22: Stationärer Gleitring
- 23: Dichtspalt
- 24: Dritte Drosseleinrichtung
- 25: Druckzufuhrleitung
- 26: Druckrückleitung
- 27: Erste Drosseleinrichtung
- 28: Zweite Drosseleinrichtung
- 29: Sensor
- 31: Rotierender Gleitring
- 32: Stationärer Gleitring
- 33: Dichtspalt
- 41: Rotierender Gleitring
- 42: Stationärer Gleitring
- 43: Dichtspalt
- 51: Rotierender Gleitring
- 52: Stationärer Gleitring
- 53: Dichtspalt
- 61: Erster Unterraum
- 62: Zweiter Unterraum
- 71: Dritter Unterraum
- 72: Vierter Unterraum
- 80: Kohleringdichtung
- 81: umlaufende Vertiefung
- 90: Verdichter
- 100: Wellendichtungsanordnung
- 101: radiale Spaltdichtung
- 102: radiale Spaltdichtung
- 110: Gemeinsame Dichtung
- 111: Gemeinsamer rotierender Gleitring
- 112: Gemeinsamer stationärer Gleitring
- 114: Zuleitung
- 115: Rückseite des gemeinsamen stationären Gleitrings
- PP: Druck Produktseite
- PA: Druck Atmosphärenseite
- L1: Erste Leckage zur Produktseite
- L2: Zweite Leckage zur Atmosphärenseite
- L3: Dritte Leckage
- L4: Vierte Leckage
- P1: Erster Druck
- P2: Zweiter Druck
- P3: Dritter Druck
- P4: Vierter Druck
- X-X: Axialrichtung

## Patentansprüche

1. Wellendichtungsanordnung, umfassend
- eine erste Dichtung (1), eine zweite Dichtung (2) und eine dritte Dichtung (3), welche in Reihe zwischen einer abzudichtenden Produktseite (15) und einer Atmosphärenseite (16) angeordnet sind,
- wobei die zweite Dichtung (2) zwischen der ersten Dichtung (1) und der dritten Dichtung (3) angeordnet ist,
- wobei in einem an die zweite Dichtung (2) in Richtung zur Produktseite (15) angrenzenden Raum (6; 61) ein erster Druck (P1) herrscht und in einem an die zweite Dichtung (2) in Richtung zur Atmosphärenseite (16) angrenzenden Raum (7; 71) ein zweiter Druck (P2) herrscht,
- wobei der zur Atmosphärenseite (16) angrenzende Raum (7; 71) mit einer Druckzufuhrleitung (25) verbunden ist, über welche ein Druckmedium in den Raum zuführbar ist, und
- wobei der erste Druck (P1) gleich oder im Wesentlichen gleich dem zweiten Druck (P2) ist, so dass die zweite Dichtung (2) mit einem Druckunterschied zwischen dem ersten Druck (P1) und dem zweiten Druck (P2) von Null betreibbar ist.

2. Wellendichtungsanordnung nach Anspruch 1, **dadurch gekennzeichnet, dass** die zweite Dichtung (2) eine gasgeschmierte Gleitringdichtung mit einem rotierenden Gleitring (21) und einem stationären Gleitring (22) ist.

3. Wellendichtungsanordnung nach Anspruch 1, **dadurch gekennzeichnet, dass** die zweite Dichtung (2) eine radiale Spaltdichtung, insbesondere eine Labyrinthdichtung oder eine Kohleringdichtung, ist.

4. Wellendichtungsanordnung nach Anspruch 1 oder 2, **dadurch gekennzeichnet, dass** die erste Dichtung (1) eine radiale Spaltdichtung, insbesondere eine Labyrinthdichtung oder eine Kohleringdichtung, ist.

5. Wellendichtungsanordnung nach einem der vorhergehenden Ansprüche, ferner umfassend eine Steuereinheit (10) und eine in der Druckzufuhrleitung (25) angeordnete erste Drosseleinrichtung (27), welche mit der Steuereinheit (10) verbunden ist, wobei die Steuereinheit (10) eingerichtet ist, mittels Öffnen oder Schließen der ersten Drosseleinrichtung (27) den zweiten Druck (P2) in Abhängigkeit des ersten Drucks (P1) zu regeln.

6. Wellendichtungsanordnung nach einem der vorhergehenden Ansprüche, **dadurch gekennzeichnet, dass** die zweite Dichtung (2) eine Diamantbeschichtung an wenigstens einem der Gleitringe aufweist.

7. Wellendichtungsanordnung nach einem der vorhergehenden Ansprüche, **dadurch gekennzeichnet, dass** Druckmedium, welches über die Druckzufuhrleitung (25) zugeführt ist, Luft oder Stickstoff ist.

8. Wellendichtungsanordnung nach einem der vorhergehenden Ansprüche, ferner umfassend eine Druckrückleitung (26), welche von dem zur Atmosphärenseite (16) gerichteten Raum (7; 71) der zweiten Dichtung (2) abgeht.

9. Wellendichtungsanordnung nach Anspruch 8, **dadurch gekennzeichnet, dass** in der Druckrückleitung eine zweite Drosseleinrichtung (28) angeordnet ist, welche mit der Steuereinheit (10) verbunden ist, wobei die Steuereinheit (10) eingerichtet ist, mittels Öffnen oder Schließen der zweiten Drosseleinrichtung (28) den zweiten Druck (P2) in Abhängigkeit des ersten Drucks (P1) zu regeln.

10. Wellendichtungsanordnung nach einem der vorhergehenden Ansprüche, ferner umfassend eine vierte Dichtung (4), welche zwischen der ersten Dichtung (1) und der zweiten Dichtung (2) angeordnet ist, wobei die vierte Dichtung (4) zwischen der ersten Dichtung (1) und der vierten Dichtung (4) einen ersten Unterraum (61) definiert und zwischen der vierten Dichtung (4) und der zweiten Dichtung (4) einen zweiten Unterraum (62) definiert, wobei der erste Unterraum (61) mit der Produktseite verbunden ist und vom zweiten Unterraum (62) eine Produktrückleitung (18) in den Prozess zurückgeht, wobei im ersten Unterraum (61) ein dritter Druck (P3) vorhanden ist, welcher größer ist als ein Druck im zweiten Unterraum, wobei im zweiten Unterraum der erste Druck (P1) herrscht, und wobei der zweite Druck (P2) im zweiten Raum gleich oder im Wesentlichen gleich wie der erste Druck (P1) ist.

11. Wellendichtungsanordnung nach Anspruch 10, ferner umfassend eine fünfte Dichtung (5), welche zwischen der zweiten Dichtung (2) und der dritten Dichtung (3) angeordnet ist, wobei zwischen der fünften Dichtung (5) und der zweiten Dichtung (2) ein dritter Unterraum (71) definiert ist und zwischen der fünften Dichtung (5) und der dritten Dichtung (3) ein vierter Unterraum (72) definiert ist, wobei der zweite Druck (P2) im dritten Unterraum (71) herrscht, der vierte Unterraum (72) mit der Druckzufuhrleitung (25) verbunden ist, die Druckrückleitung (26) vom dritten Unterraum (71) abgeht, und im vierten Unterraum (72) ein vierter Druck (P4) herrscht, welcher größer als der zweite Druck (P2) ist.

12. Wellendichtungsanordnung nach Anspruch 11, **dadurch gekennzeichnet, dass** die dritte Dichtung (3) und die fünfte Dichtung (5) in eine gemeinsame Dichtung (110) integriert sind, wobei die gemeinsame Dichtung (110) einen gemeinsamen rotierenden Gleitring (111) und einen gemeinsamen stationären Gleitring (112) aufweist, wobei im stationären Gleitring (112) von dessen Rückseite (115) eine Zuleitung (114) zu den Gleitflächen der Gleitringe geführt ist, wobei die Zuleitung (114) mit der Druckzufuhrleitung (25) verbunden ist und der vierte Unterraum (72) an den Gleitflächen der beiden Gleitringe (111, 112) am Ende der Zuleitung (114) angeordnet ist.

13. Wellendichtungsanordnung nach einem der Ansprüche10 bis 12, **dadurch gekennzeichnet, dass** in der Produktrückleitung (18) eine dritte Drosseleinrichtung (24) angeordnet ist, welche mit der Steuereinheit (10) verbunden ist, wobei die Steuereinheit (10) eingerichtet ist, mittels Öffnen und Schließen der dritten Drosseleinrichtung (24) den ersten Druck (P1) zu regeln.

14. Wellendichtungsanordnung nach einem der Ansprüche 5 bis 13, **dadurch gekennzeichnet, dass** alle Dichtungen gasgeschmierte Gleitringdichtungen sind.

15. Fluidmaschine, insbesondere Turbine oder Verdichter, umfassend eine abzudichtende Welle (8) und eine Wellendichtungsanordnung (100) nach einem der vorhergehenden Ansprüche.

16. Verfahren zum Betreiben einer Wellendichtungsanordnung (100), umfassend eine erste Dichtung (1), eine zweite Dichtung (2) und eine dritte Dichtung (3), welche in Reihe an einer Welle (8) angeordnet sind, wobei zwischen der ersten Dichtung (1) und der zweiten Dichtung (2) ein erster Raum (6) definiert ist und zwischen der zweiten Dichtung (2) und der dritten Dichtung (3) ein zweiter Raum (7) definiert ist, wobei dem ersten Raum (6) ein abzudichtendes Produktmedium zugeführt wird und dem zweiten Raum (7) ein Druckmedium unter Druck zugeführt wird, wobei ein Druck im ersten Raum (6) und im zweiten Raum (7) derart geregelt wird, dass ein erster Druck (P1) im ersten Raum (6) gleich einem zweiten Druck (P2) ist oder dass der erste Druck (P1) im Wesentlichen gleich dem zweiten Druck (P2) im zweiten Raum (7) ist, so dass die zweite Dichtung (2) ohne oder nur mit minimalem Druckgefälle zwischen erstem Druck (P1) und zweitem Druck (P2) betreibbar ist.

17. Verfahren nach Anspruch16, **dadurch gekennzeichnet, dass** der zweite Druck (P2) mittels einer Drosseleinrichtung (27, 28) in Abhängigkeit des ersten Drucks (P1) geregelt wird.

18. Verfahren nach Anspruch16 oder 17, **dadurch gekennzeichnet, dass** der erste Druck (P1) des Produktmediums nach Entnahme von der Produktseite (15) mittels einer Drosseleinrichtung (24) geregelt wird.

## Claims

1. Shaft seal arrangement, comprising
- a first seal (1), a second seal (2) and a third seal (3) which are arranged in series between a product side (15) to be sealed and an atmosphere side (16),
- wherein the second seal (2) is arranged between the first seal (1) and the third seal (3),
- wherein a first pressure (P1) is present in a space (6; 61) adjacent to the second seal (2) in the direction towards the product side (15), and a second pressure (P2) is present in a space (7; 71) adjacent to the second seal (2) in the direction towards the atmosphere side (16),
- wherein the space (7; 71) adjacent to the atmosphere side (16) is connected to a pressure supply line (25) via which a pressure medium can be supplied into the space, and
- wherein the first pressure (P1) is equal or substantially equal to the second pressure (P2), so that the second seal (2) can be operated with a pressure difference of zero between the first pressure (P1) and the second pressure (P2).

2. Shaft seal arrangement according to claim 1, **characterized in that** the second seal (2) is a gas-lubricated mechanical seal with a rotating mechanical seal (21) and a stationary mechanical seal (22.

3. Shaft seal arrangement according to claim 1, **characterized in that** the second seal (2) is a radial gap seal, in particular a labyrinth seal or a carbon ring seal.

4. Shaft seal arrangement according to claim 1 or 2, **characterized in that** the first seal (1) is a radial gap seal, in particular a labyrinth seal or a carbon ring seal.

5. Shaft seal arrangement according to one of the preceding claims, further comprising a control unit (10) and a first throttling device (27) that is arranged inside the pressure supply line (25) and connected to the control unit (10), wherein the control unit (10) is configured for controlling the second pressure (P2) by means of opening or closing the first throttling device (27) depending on the first pressure (P1).

6. Shaft seal arrangement according to one of the preceding claims, **characterized in that** the second seal (2) has a diamond coating at least at one of the mechanical seals.

7. Shaft seal arrangement according to one of the preceding claims, **characterized in that** the pressure medium that is supplied via the pressure supply line (25) is air or nitrogen.

8. Shaft seal arrangement according to one of the preceding claims, further comprising a pressure return line (26) which branches off from the space (7; 71) of the second seal (2) which is facing towards the atmosphere side (16).

9. Shaft seal arrangement according to claim 8, **characterized in that** a second throttling device (28) is arranged inside the pressure return line and is connected to the control unit (10), wherein the control unit (10) is configured for controlling the second pressure (P2) by means of opening or closing the second throttling device (28) depending on the first pressure (P1).

10. Shaft seal arrangement according to one of the preceding claims, further comprising a fourth seal (4) which is arranged between the first seal (1) and the second seal (2), wherein the fourth seal (4) defines a first subspace (61) between the first seal (1) and the fourth seal (4), and defines a second subspace (62) between the fourth seal (4) and the second seal (4), wherein the first subspace (61) is connected to the product side and a product return line (18) leads back from the second subspace (62) into the process, wherein a third pressure (P3) is present in the first subspace (61)) which is higher than a pressure in the second subspace, wherein the first pressure (P1) is present in the second subspace, and wherein the second pressure (P2) in the second space is equal or substantially equal to the first pressure (P1).

11. Shaft seal arrangement according to claim 10, further comprising a fifth seal (5) which is arranged between the second seal (2) and the third seal (3), wherein a third subspace (71) is defined between the fifth seal (5) and the second seal (2), and a fourth subspace (72) is defined between the fifth seal (5) and the third seal (3), wherein the second pressure (P2) is present in the third subspace (71), the fourth subspace (72) is connected to the pressure supply line (25), the pressure return line (26) branches off from the third subspace (71), and a fourth pressure (P4) that is higher than the second pressure (P2) is present in the fourth subspace (72).

12. Shaft seal arrangement according to claim 11, **characterized in that** the third seal (3) and the fifth seal (5) are integrated inside a common seal (110), wherein the common seal (110) has a common rotating mechanical seal (111) and a common stationary mechanical seal (112), wherein a feed line (114) runs inside the stationary mechanical seal (112) from its rear side (115) to the sliding surfaces of the mechanical seals, wherein the feed line (114) is connected to the pressure supply line (25), and the fourth subspace (72) is arranged at the sliding surfaces of the two mechanical seals (111, 112) at the end of the feed line (114).

13. Shaft seal arrangement according to one of claim 10 to 12, **characterized in that** a third throttling device (24) is arranged inside the product return line (18) and connected to the control unit (10), wherein the control unit (10) is configured for controlling the first pressure (P1) by means of opening and closing the third throttling device (24).

14. Shaft seal arrangement according to one of claims 5 to 13, **characterized in that** all seals are gas-lubricated mechanical seals.

15. Fluid machine, in particular turbine or compressor, comprising a shaft (8) to be sealed and a shaft seal arrangement (100) according to one of the preceding claims.

16. Method for operating a shaft seal arrangement (100), comprising a first seal (1), a second seal (2) and a third seal (3) which are arranged in series at a shaft (8), wherein a first space (6) is defined between the first seal (1) and the second seal (2), and a second space (7) is defined between the second seal (2) and the third seal (3), wherein a product medium to be sealed is supplied to the first space (6), and a pressurized pressure medium is supplied to the second space (7), wherein a pressure in the first space (6) and in the second space (7) is controlled in such a manner that a first pressure (P1) in the first space (6) is equal to the second pressure (P2), or that the first pressure (P1) is substantially equal to the second pressure (P2) in the second space (7), so that the second seal (2) can be operated without or with only a minimal pressure gradient between the first pressure (P1) and the second pressure (P2).

17. Method according to claim 16, **characterized in that** the second pressure (P2) is controlled by means of a throttling device (27, 28) depending on the first pressure (P1).

18. Method according to claim 16 or 17, **characterized in that** the first pressure (P1) of the product medium is controlled by means of a throttling device (24) after having been extracted from the product side (15).

## Revendications

1. Ensemble de joints d'étanchéité d'arbre, comprenant
- un premier joint d'étanchéité (1), un deuxième joint d'étanchéité (2) et un troisième joint d'étanchéité (3), lesquels sont disposés de manière alignée entre un côté de produit (15) à étanchéifier et un côté atmosphère (16),
- dans lequel le deuxième joint d'étanchéité (2) est disposé entre le premier joint d'étanchéité (1) et le troisième joint d'étanchéité (3),
- dans lequel une première pression (P1) règne dans un espace (6 ; 61) jouxtant le deuxième joint d'étanchéité (2) en direction du côté de produit (15) et une deuxième pression (P2) règne dans un espace (7; 71) jouxtant le deuxième joint d'étanchéité (2) en direction du côté atmosphère (16),
- dans lequel l'espace (7 ; 71) jouxtant en direction du côté atmosphère (16) est relié à un conduit d'amenée de pression (25), par l'intermédiaire duquel un milieu sous pression peut être amené dans l'espace, et
- dans lequel la première pression (P1) est égale ou sensiblement égale à la deuxième pression (P2) de sorte que le deuxième joint d'étanchéité (2) puisse fonctionner avec une différence de pression entre la première pression (P1) et la deuxième pression (P2) de zéro.

2. Ensemble de joints d'étanchéité d'arbre selon la revendication 1, **caractérisé en ce que** le deuxième joint d'étanchéité (2) est un joint d'étanchéité à anneau glissant lubrifié par gaz avec un anneau glissant rotatif (21) et un anneau glissant stationnaire (22).

3. Ensemble de joints d'étanchéité d'arbre selon la revendication 1, **caractérisé en ce que** le deuxième joint d'étanchéité (2) est un joint d'étanchéité de fente radial, en particulier un joint d'étanchéité à labyrinthe ou un joint d'étanchéité à bague de graphite.

4. Ensemble de joints d'étanchéité d'arbre selon la revendication 1 ou 2, **caractérisé en ce que** le premier joint d'étanchéité (1) est un joint d'étanchéité de fente radial, en particulier un joint d'étanchéité à labyrinthe ou un joint d'étanchéité à bague de graphite.

5. Ensemble de joints d'étanchéité d'arbre selon l'une quelconque des revendications précédentes, comprenant en outre une unité de commande (10) et un premier dispositif d'étranglement (27) disposé dans le conduit d'amenée de pression (25), lequel est relié à l'unité de commande (10), dans lequel l'unité de commande (10) est mise au point pour réguler, au moyen de l'ouverture ou de la fermeture du premier dispositif d'étranglement (27), la deuxième pression (P2) en fonction de la première pression (P1).

6. Ensemble de joints d'étanchéité d'arbre selon l'une quelconque des revendications précédentes, **caractérisé en ce que** le deuxième joint d'étanchéité (2) présente un revêtement en diamant au niveau d'au moins un des anneaux glissants.

7. Ensemble de joints d'étanchéité d'arbre selon l'une quelconque des revendications précédentes, **caractérisé en ce qu'**un milieu sous pression, qui est amené par l'intermédiaire du conduit d'amenée de pression (25), est de l'air ou de l'azote.

8. Ensemble de joints d'étanchéité d'arbre selon l'une quelconque des revendications précédentes, comprenant en outre un conduit de retour de pression (26), qui part de l'espace (7 ; 71), dirigé vers le côté atmosphère (16), du deuxième joint d'étanchéité (2).

9. Ensemble de joints d'étanchéité d'arbre selon la revendication 8, **caractérisé en ce qu'**est disposé dans le conduit de retour de pression un deuxième dispositif d'étranglement (28), lequel est relié à l'unité de commande (10), dans lequel l'unité de commande (10) est mise au point pour réguler, au moyen de l'ouverture ou de la fermeture du deuxième dispositif d'étranglement (28), la deuxième pression (P2) en fonction de la première pression (P1).

10. Ensemble de joints d'étanchéité d'arbre selon l'une quelconque des revendications précédentes, comprenant en outre un quatrième joint d'étanchéité (4) qui est disposé entre le premier joint d'étanchéité (1) et le deuxième joint d'étanchéité (2), dans lequel le quatrième joint d'étanchéité (4) définit un premier sous-espace (61) entre le premier joint d'étanchéité (1) et le quatrième joint d'étanchéité (4) et définit un deuxième sous-espace (62) entre le quatrième joint d'étanchéité (4) et le deuxième joint d'étanchéité (4), dans lequel le premier sous-espace (61) est relié au côté de produit et un conduit de retour de produit (18) revient dans le processus depuis le deuxième sous-espace (62), dans lequel est présente, dans le premier sous-espace (61), une troisième pression (P3), laquelle est plus grande qu'une pression dans le deuxième sous-espace, dans lequel la première pression (P1) règne dans le deuxième sous-espace, et dans lequel la deuxième pression (P2) dans le deuxième espace est égale ou sensiblement égale à la première pression (P1).

11. Ensemble de joints d'étanchéité d'arbre selon la revendication 10, comprenant en outre un cinquième joint d'étanchéité (5), qui est disposé entre le deuxième joint d'étanchéité (2) et le troisième joint d'étanchéité (3), dans lequel un troisième sous-espace (71) est défini entre le cinquième joint d'étanchéité (5) et le deuxième joint d'étanchéité (2) et un quatrième sous-espace (72) est défini entre le cinquième joint d'étanchéité (5) et le troisième joint d'étanchéité (3), dans lequel la deuxième pression (P2) règne dans le troisième sous-espace (71), le quatrième sous-espace (72) est relié au conduit d'amenée de pression (25), le conduit de retour de pression (26) part du troisième sous-espace (71) et une quatrième pression (P4) règne dans le quatrième sous-espace (72), laquelle est plus grande que la deuxième pression (P2).

12. Ensemble de joints d'étanchéité d'arbre selon la revendication 11, **caractérisé en ce que** le troisième joint d'étanchéité (3) et le cinquième joint d'étanchéité (5) sont intégrés dans un joint d'étanchéité commun (110), dans lequel le joint d'étanchéité commun (110) présente un anneau glissant commun rotatif (111) et un anneau glissant commun stationnaire (112), dans lequel un conduit d'arrivée (114) est guidé dans l'anneau glissant stationnaire (112) depuis le côté arrière (115) de celui-ci vers les surfaces glissantes des anneaux glissants, dans lequel le conduit d'arrivée (114) est relié au conduit d'amenée de pression (25) et le quatrième sous-espace (72) est disposé au niveau des surfaces glissantes des deux anneaux glissants (111, 112) à l'extrémité du conduit d'arrivée (114).

13. Ensemble de joints d'étanchéité d'arbre selon l'une quelconque des revendications 10 à 12, **caractérisé en ce que** dans le conduit de retour de produit (18) est disposé un troisième dispositif d'étranglement (24), qui est relié à l'unité de commande (10), dans lequel l'unité de commande (10) est mise au point pour réguler, au moyen de l'ouverture et de la fermeture du troisième dispositif d'étranglement (24), la première pression (P1).

14. Ensemble de joints d'étanchéité d'arbre selon l'une quelconque des revendications 5 à 13, **caractérisé en ce que** tous les joints d'étanchéité sont des joints d'étanchéité à anneau glissant lubrifiés par gaz.

15. Machine à fluide, en particulier turbine ou compresseur, comprenant un arbre (8) à étanchéifier et un ensemble de joints d'étanchéité (100) selon l'une quelconque des revendications précédentes.

16. Procédé servant à faire fonctionner un ensemble de joints d'étanchéité (100), comprenant un premier joint d'étanchéité (1), un deuxième joint d'étanchéité (2) et un troisième joint d'étanchéité (3), lesquels sont disposés de manière alignée au niveau d'un arbre (8), dans lequel un premier espace (6) est défini entre le premier joint d'étanchéité (1) et le deuxième joint d'étanchéité (2) et un deuxième espace (7) est défini entre le deuxième joint d'étanchéité (2) et le troisième joint d'étanchéité (3), dans lequel un milieu de produit à étanchéifier est amené au premier espace (6) et un milieu sous pression est amené sous pression au deuxième espace (7), dans lequel une pression dans le premier espace (6) et dans le deuxième espace (7) est régulée de telle manière qu'une première pression (P1) dans le premier espace (6) est égale à une deuxième pression (P2) ou que la première pression (P1) est sensiblement égale à la deuxième pression (P2) dans le deuxième espace (7) de sorte que le deuxième joint d'étanchéité (2) puisse fonctionner sans ou seulement avec une baisse de pression minimale entre la première pression (P1) et la deuxième pression (P2).

17. Procédé selon la revendication 16, **caractérisé en ce que** la deuxième pression (P2) est régulée au moyen d'un dispositif d'étranglement (27, 28) en fonction de la première pression (P1).

18. Procédé selon la revendication 16 ou 17, **caractérisé en ce que** la première pression (P1) du milieu de produit est régulée après le retrait du côté de produit (15) au moyen d'un dispositif d'étranglement (24).
